# EUROPÄISCHE PATENTSCHRIFT

(11) **EP 2 377 194 B1**
(45) Veröffentlichungstag und Bekanntmachung des Hinweises auf die Patenterteilung: **30.04.2014**
(21) Anmeldenummer: 09765093.1
(22) Anmeldetag: 03.12.2009
(51) Int. Cl.: H01M 10/04, H01M 10/60, B60L 11/18, H01M 10/0525

(54) **ENERGIESPEICHER MIT EINER KÜHLVORRICHTUNG**
ENERGY STORAGE DEVICE WITH COOLING DEVICE
ACCUMULATEUR D'ÉNERGIE AVEC DISPOSITIF DE REFROIDISSEMENT

(30) Priorität: 10.12.2008 DE 102008061277
(43) Veröffentlichungstag der Anmeldung: 19.10.2011
(73) Patentinhaber: Continental Automotive GmbH, 30165 Hannover (DE)
(72) Erfinder: GUENER, Nevzat, 12107 Berlin (DE); KOHLSTRUNK, Johannes, 10713 Berlin (DE); TILLMANN, Stefan, 13469 Berlin (DE)
(86) Internationale Anmeldenummer: PCT/EP2009/066341
(87) Internationale Veröffentlichungsnummer: WO 2010/066637

(56) Entgegenhaltungen:
- EP-A1- 2 017 919
- EP-A2- 2 065 963
- WO-A2-2008/106946
- JP-A- 7 006 796
- JP-A- 2005 071 784
- US-A- 5 871 861

## Beschreibung

Die Erfindung betrifft einen Energiespeicher zur Speicherung von elektrischer Energie mit einer Kühlvorrichtung, insbesondere für ein Kraftfahrzeug.

Als Hybrid- bzw. Elektrofahrzeuge bezeichnet man Fahrzeuge, die prinzipbedingt ganz oder teilweise durch elektrische Energie angetrieben werden. Kraftfahrzeuge mit Hybridantrieb, auch Hybridfahrzeuge genannt, haben zur Erzeugung der Antriebsleistung beispielsweise eine Verbrennungsmaschine und eine elektrische Maschine. Bei einem reinen Elektrofahrzeug wird die Antriebsleistung allein durch eine elektrische Maschine bereitgestellt. Beiden Fahrzeugtypen, Hybrid- und Elektrofahrzeug ist gemein, dass große Mengen elektrischer Energie bereitgestellt und transferiert werden müssen.

Die Speicherung der elektrischen Energie erfolgt dabei in Energiespeichern, insbesondere Batterien, die meist aus einer Vielzahl von einzelnen Zellen aufgebaut sind. Derartige Zellen können beispielsweise Lithium-Ionen-Zellen sein. Eine Zelle besteht dabei aus dem "eigentlichen" Zellkörper (Verbund aus Ableitermetallfolien, Elektrodenbeschichtungen und Separator), den meist an die Ableiterfolie angeschweißten Batteriepolen (Fähnchen, Tabs) und der Verpackung. Das Gehäuse wird bis auf eine kleine Öffnung versiegelt. Durch die Öffnung wird der Elektrolyt eingebracht, bevor die Zelle bzw. der Zellkörper endgültig verschlossen wird. Für Lithium-Ionen-Zellen, die aus einem Elektrodenstapel oder einem "prismatischen Jellyrole" aufgebaut sind werden gerne Folienverpackung aus einem Verbund aus dünnen Kunststofffolien und Alu-Zwischen¬schichten verwendet. Diese haben im Vergleich zu starren Metallgehäusen den Vorteil, dass weniger Material verwendet wird. Volumen und Gewicht der Verpackung sind geringer und dadurch wird die Energie- oder Leistungsdichte (W/L, Wh/L, W/kg, Wh/kg) der Zelle verbessert. Die Folie für die Verpackung prismatischer Zellen wir häufig auch Coffee-Bag genannt, da ein ähnlicher Prozess wie für die Verpackung von Kaffee im Hintergrund steht: Laminatfolien die unter Vakuum versiegelt werden, um das innere Produkt wasserfrei und kompakt zu halten und vor Verlust des Aromas (des Elektrolyten) zu schützen. In aller Regel handelt es sich dabei nicht um eine durch Blasextrusion hergestellte Tüte, sondern um eine aus zwei miteinander verschweißten Teilen. Die Siegelnähte sind seitlich, eventuell auch oben und unten, zu finden. Als Faustregel für die Siegelnahtbreite gilt 1mm pro Jahr Lebensdauer. Für automobile Anwendungen mit Forderungen von 10 Jahre Lebensdauer, ergeben sich so Siegelnähte von bis zu 10mm. Sie werden üblicherweise seitlich gefaltet und an das Produkt angelegt, um zu große Volumenverluste zu vermeiden. Für einzelne Zellen kann auf diese Art tatsächlich das Todvolumen reduziert werden. Für Energiespeicher aus miteinander seriell oder parallel verschalteten Zellen hängt es von der Verbindungstechnologie ab, ob die seitliche Naht störend wirkt und Berücksichtigung im Energiespeicher- bzw. Batteriedesign finden muss.

Wie bereits erwähnt sind in Energiespeichern für Kraftfahrzeuge hohe Leistungs- und/ oder Energiedichten je nach Funktion (Hybrid oder Elektrofahrzeug) auf geringem Bauraum notwendig. Diese Anforderungen werden unter anderem mit den schon erwähnten Lithium-Ionen-Energiespeichern realisiert. Dabei entsteht im Betrieb durch die hohen Lade- und Entladeströme in den Zellen des Energiespeichers Wärme. Für eine optimale Funktion und eine hohe Lebensdauer der Zellen muss die Wärme möglichst effizient und gleichmäßig über den Querschnitt der Zellen zu einer Kühlvorrichtung abgeführt werden.

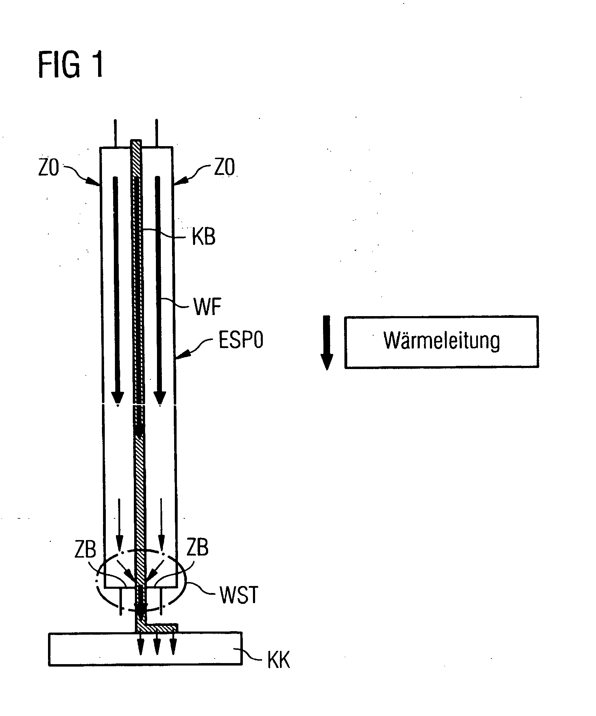

Es sei nun auf Figur 1 verwiesen, in der ein Aufbau einer Kühlvorrichtung für einen herkömmlichen Energiespeicher ESP0 gezeigt ist. Diese besteht in der Ableitung der Wärme durch ein auf der flachen Seite (oder der Grundfläche bei prismatischen Zellen) der Zellen Z0 angebrachtes Kühlblech KB. Die Zellen weisen jedoch eine richtungsabhängige unterschiedliche Wärmeleitung auf. In Richtung der Fläche (X-Y) ist durch die im Inneren der Zellen befindliche Stromableiter aus Aluminium und Kupfer eine hohe Wärmeleitung zu finden. Senkrecht, in Richtung der Flächennormalen, ist die Wärmeleitung deutlich vermindert. Die Elektrodenbeschichtung und der Separator zwischen den Elektroden leiten die Wärme deutlich weniger.

Die Zellen Z0 sind jeweils rechts und links auf das Kühlblech KB aufgebracht. Dabei wird mittels Klebeverbindung eine stabile, thermisch leitende und elektrisch isolierende Verbindung realisiert. Das Kühlblech KB übernimmt dabei die Funktion der Wärmeleitung und Stabilisierung der Zellen Z0.

Bei diesem herkömmliche Aufbau besteht auch in den Zellen ein Wärmefluss WF (gekennzeichnet durch die in den Zellen Z0 von oben nach unten verlaufenden Pfeile in Richtung eines mit dem Kühlblech KB verbundenen Kühlkörper KK), der zu einem Wärmestau WST am Zellboden ZB (Zellunterkannte ohne Siegelnaht) führt.

Die Druckschrift US 5 871 861 A zeigt einen Energiespeicher zur Speicherung elektrischer Energie mit zumindest einer Zelle mit einem Zellkörper, der begrenzt wird durch zwei zu einer Zellkörperebene parallel verlaufende Grundflächen, sowie durch eine erste und mehrere zweite senkrecht zur Zellkörperebene verlaufende Seitenflächen, die die Grundflächen verbinden, und mit einer Kühlvorrichtung, die über die erste Seitenfläche Wärme aus der Zelle abführt.

Die Druckschrift WO 2008/106946 A2 offenbart eine Energiespeicherzelle mit einer flexiblen Hülle, die flächig an einer Wärmeleitplatte befestigt ist, wobei die Wärmeleitplatte thermisch an eine Temperiervorrichtung zum Kühlen und/oder Heizen der Energiespeicherzelle gekoppelt ist.

Die Druckschrift JP 2005 071784 A zeigt eine Batterie, die aus einer Vielzahl von übereinander gestapelten Zellen besteht, welche in Reihe miteinander verbunden sind, wobei ein Kühlelement an zumindest einer der Zellen angebracht ist.

Die Aufgabe der vorliegenden Erfindung besteht nun darin, eine effiziente Möglichkeit zur Schaffung eines Energiespeichers anzugeben, durch die die Wärmeleitung im Energiespeicher optimiert und ein Wärmestau verhindert werden kann.

Die Erfindung wird durch die unabhängigen Ansprüche gelöst. Vorteilhafte Ausgestaltungen der Erfindung sind Gegenstand der Unteransprüche.

Gemäß einem ersten Aspekt der Erfindung umfasst ein Energiespeicher zur Speicherung von elektrischer Energie zumindest eine Flachzelle (zur Speicherung von elektrischer Energie) mit einem flachen Zellkörper, der begrenzt wird durch zwei zu einer Zellkörperebene parallel verlaufende Grundflächen, sowie durch eine erste und mehrere zweite senkrecht zur Zellkörperebene verlaufende Seitenflächen, die die Grundflächen verbinden. Die Flachzelle ist dabei insbesondere als eine prismatische Flachzelle ausgelegt. Hierbei kann der Zellkörper eine im Wesentlichen prismaförmige Gestalt haben. Der Energiespeicher hat ferner eine Kühlvorrichtung mit einem Kühlelement, das mit der ersten Seitenfläche thermisch gekoppelt ist, um über diese Seitenfläche Wärme aus der Flachzelle abzuführen. Die Kopplung erfolgt dabei insbesondere flächig, um eine gute Wärmeableitung zu gewährleisten. Die Wärme wird so vom Zellboden (realisiert durch die erste Seitenfläche) in das Kühlelement und vom Kühlelement in eine Kühlsenke geleitet. Dadurch wird die Wärmeleitung an einer thermodynamisch kritischen Stelle optimiert sowie die Entstehung von Hotspots (heiße Punkte) am Zellboden unter vergleichbaren Bedingungen vermieden.

Der Energiespeicher ist dabei insbesondere für den Einsatz in einem Kraftfahrzeug geeignet.

Gemäß einer vorteilhaften Ausgestaltung weist der Energiespeicher ferner eine wärmeleitende Verbindungsschicht auf, die zwischen der ersten Seitenfläche und dem Kühlelement angeordnet ist. Diese wärmeleitende Verbindungsschicht kann dabei einen thermisch leitenden Polyurethanschaum (PU-Schaum), einen thermisch leitender GAP-Filler (Zwischenraumfüller), ein Thermo-Pad (Wärmekissen), eine Wärmeleitpaste, einen thermisch leitender Schaumstoff oder ein doppelseitiges Klebeband umfassen. Neben der verbesserten Wärmeankopplung des Kühlelements an die erste Seitenfläche kann insbesondere bei Verwendung weicher Materialien (PU-Schaum, Schaumstoff) als wärmeleitende Verbindungsschicht eine mechanischen Entkopplung des Zellkörpers zum Kühlelement erreicht werden, wodurch die Funktionsweise der Flachzelle verbessert und die Lebensdauer erhöht wird.

Es ist denkbar, dass der Zellkörper der zumindest einen Flachzelle einen den Zellkörper umgebende Verpackung aufweist, die zumindest entlang der ersten Seitenfläche einen vom Zellkörper wegstehenden Verbindungsabschnitt aufweist. Dieser Verbindungsabschnitt wird auch als Siegelnaht bezeichnet und ergibt sich bei folienverpackten Flachzellen, die auch unter dem Trivialnamen "Coffee-Bags" bekannt sind. Gerade bei Verwendung dieser folienverpackten Flachzellen mit Siegelnähten insbesondere an der ersten Seitenfläche ist die Verwendung einer wärmeleitenden Verbindungsschicht vorteilhaft. Besonders vorteilhaft ist hier die Verwendung von weichen Materialien als wärmeleitende Verbindungsschicht, um die Siegelnähte mechanisch so wenig wie möglich zu beanspruchen.

Eine weitere Möglichkeit, die Verbindungsabschnitte bzw. die Siegelnähte "zu schützen" besteht darin, dass das Kühlelement zumindest eine Ausnehmung bzw. eine Nut zur Aufnahme des von der ersten Seitenfläche wegstehenden Verbindungsabschnitts aufweist.

Zur weiteren Verbesserung der Kühlung der Flachzelle in dem Energiespeicher hat die Kühlvorrichtung ferner eine Kühlplatte, die mit einer der Grundflächen der zumindest einen Flachzelle thermisch gekoppelt ist. Die Kühlplatte kann dabei als eine Kühlfinne oder ein Kühlblech ausgebildet sein. Desweiteren kann die Kühlplatte mit dem Kühlelement verbunden sein. Insbesondere für eine feste Verbindung von Kühlelement und Kühlplatte kann eine Klemm-, Steck-, Niet-, Schraub- oder Schweißverbindung vorgesehen sein.

Gemäß einer weiteren Ausführungsform der Erfindung weist der Energiespeicher zumindest zwei Flachzellen auf, die jeweils an einer Grundfläche mit der Kühlplatte und jeweils an der ersten Seitenfläche mit dem Kühlelement verbunden sind.

Bei den jeweiligen Flachzellen kann es sich um Lithium-Ionen-Zellen handeln, so dass ein Lithium-Ionen-Energiespeicher geschaffen wird.

Gemäß einem weiteren Aspekt der Erfindung wird eine Energiespeicheranordnung mit einem oben erwähnten Energiespeicher oder dessen Ausgestaltungen und einem Kühlkörper geschaffen, der als Wärmesenke für das Kühlelement und gegebenenfalls die Kühlplatte dient, und mit dem Kühlelement und/oder der Kühlplatte verbunden ist. Der Kühlkörper kann dabei als ein mit einem Kühlmittel, wie Wasser, gekühlter Hohlkörper ausgebildet sein.

Gemäß einem weiteren Aspekt der Erfindung wird ein Kraftfahrzeug mit einer oben erwähnten Energiespeicheranordnung geschaffen. Insbesondere kann hierbei der Kühlkörper mit einem fahrzeugseitigen Kühlaggregat thermisch verbunden sein oder von diesem gebildet werden.

Im Folgenden sollen nun beispielhafte Ausführungsformen der vorliegenden Erfindung bezugnehmend auf die beiliegenden Zeichnungen näher erläutert werden. Es zeigen:
Fig. 1 eine schematische Seitendarstellung des Aufbaus und eines Energiespeichers mit einer herkömmlichen Kühlvorrichtung;
Fig. 2 eine vergleichende schematische Seitendarstellung des Aufbaus und eines Energiespeichers mit einer herkömmlichen Kühlvorrichtung und mit einer Kühlvorrichtung gemäß einer Ausführungsform der Erfindung;
Fig. 3 eine Frontansicht des in Figur 2 dargestellten Energiespeichers mit einer Kühlvorrichtung gemäß einer Ausführungsform der Erfindung aus Blickrichtung des Pfeils FA in Figur 2;
Fig. 4 eine Detaildarstellung des in Figur 3 angedeuteten Ausschnitts A;
Fig. 5 eine weitere schematische Seitendarstellung des Aufbaus und eines Energiespeichers gemäß einer Ausführungsform der Erfindung;
Fig. 6 eine Detaildarstellung des in Figur 5 angedeuteten Ausschnitts B.

Es sei zunächst bemerkt, dass im Folgenden gleiche Bezugszeichen gleiche Teile bezeichnen.

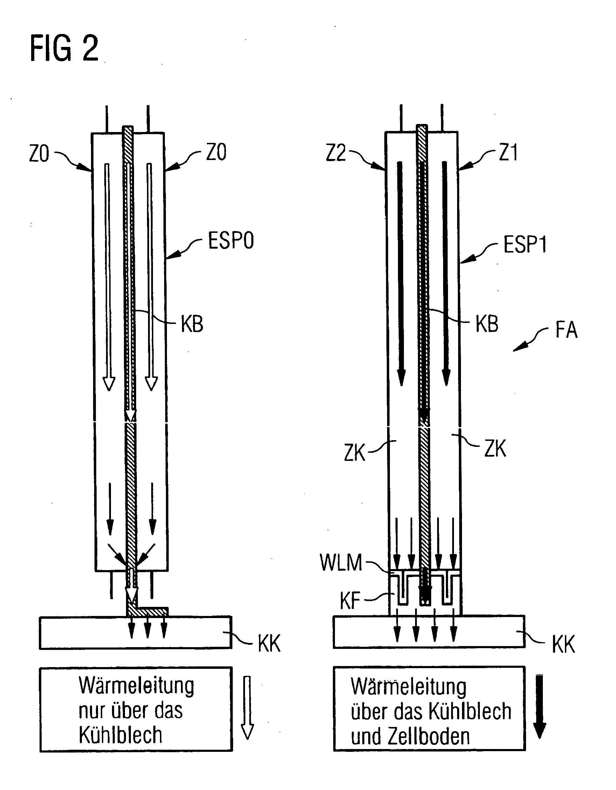

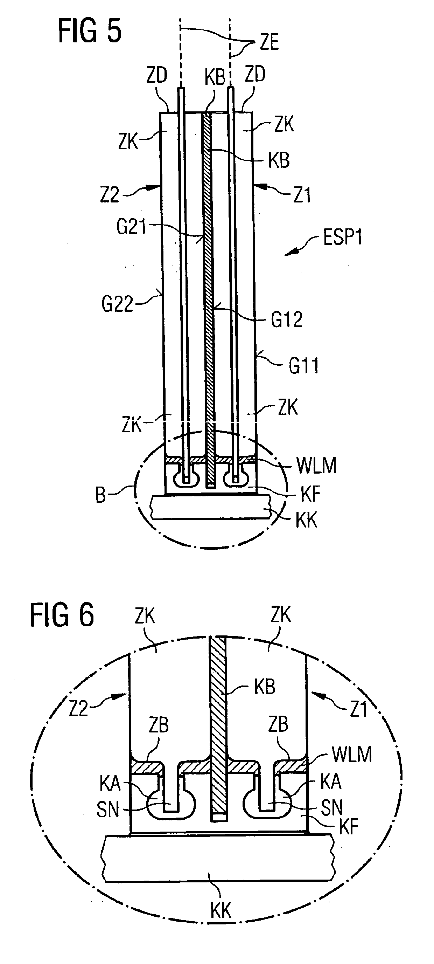

Für den prinzipiellen Aufbau eines Energiespeichers gemäß einer Ausführungsform der Erfindung sei auf die Figuren 2 bis 6 verwiesen. Dabei hat ein Energiespeicher ESP1 zur Speicherung von elektrischer Energie zwei prismatische Flachzellen Z1 und Z2 (beispielsweise Lithium-Ionen-Zellen) mit jeweils einem (flachen) Zellkörper ZK, der begrenzt wird durch zwei zu einer Zellkörperebene parallel verlaufende Grundflächen G11, G12 bzw. G21, G22 sowie durch eine erste ZB (Zellboden) und mehrere zweite ZD (hier lediglich die Seitenflächen am oberen Abschnitt der Zelle bezeichnet) senkrecht zur Zellkörperebene ZE verlaufende Seitenflächen, die die Grundflächen verbinden. Eine Kühlvorrichtung des Energiespeichers ESP1 umfasst ein Kühlelement bzw. einen Kühlfuß KF, der mit einem jeweiligen Zellboden ZB thermisch gekoppelt ist, um über den Zellboden ZB Wärme aus den Flachzellen Z1 und Z2 abzuführen. Ferner ist eine wärmeleitende Verbindungsschicht WLM vorgesehen, die zwischen dem jeweiligen Zellboden ZB und dem Kühlfuß KF angeordnet ist. Der Kühlfuß KF hat jeweils Ausnehmungen KA zur Aufnahme von Siegelnähten SN, die die Flachzellen aufgrund ihrer Folienverpackungen aufweisen.

Desweiteren hat die Kühlvorrichtung eine Kühlplatte in Form eines Kühlblechs KB, das mit einer der Grundflächen G12 und G21 der Flachzellen Z1 und Z2 thermisch gekoppelt ist. Das Kühlblech KB ist dabei fest mit dem Kühlfuß KF verbunden. Ein Kühlkörper KK dient als Wärmesenke für den Kühlfuß KF und das Kühlblech KB.

Bei den in den Figuren 2 bis 6 dargestellten Ausführungsformen der Erfindung besteht die Idee darin, dass die Ableitung der Wärme zusätzlich zu dem Kühlblech KB (Kühlplatte) über den Zellboden ZB (eine erste Seitenfläche) erfolgt. Dies wird mit dem Kühlfuß KF (als Kühlelement) realisiert, der über die wärmeleitende Verbindung (wie beispielsweise aus PU-Schaum, GAP-Filler, Thermo-Pad, Wärmeleitpaste, dünnen Schaumstoff, doppelseitiges Klebeband, usw.) WLM zwischen Zellboden und Kühlfuß an den Kühlkörper KK angebunden ist. Für die Siegelnaht SN der Zellen (sofern vorhanden) ist eine entsprechende Ausnehmung bzw. ein entsprechender Hohlraum KA in dem Kühlfuß vorgesehen.

Um das Kühlblech KB fest mit einem Wärmetauscher (realisiert durch den Kühlkörper KK) zu kontaktieren und zur weiteren Wärmeleitung ist das Kühlblech KB, wie bereits angedeutet, fest mit dem Kühlfuß KF verbunden (z.B. durch eine Klemm-, Steck-, Niet-, Schraub- oder Schweißverbindung). Kühlbleche, auch als Kühlfinnen bezeichnet, bestehen häufig aus zwei Bauteilen, da die Form von Finne und Kühlfuß weit außerhalb des Normkreises für Alu-Druckguss liegt.

Die Wärme wird so vom Zellboden ZB in den Kühlfuß KF und vom Kühlfuß in den Kühlkörper KK geleitet, ohne Umweg über das Kühlblech KB. Dadurch wird die Wärmeleitung an einer thermodynamisch kritischen Stelle optimiert sowie die Entstehung von Hotspots an der Zellunterseite unter vergleichbaren Bedingungen vermieden.

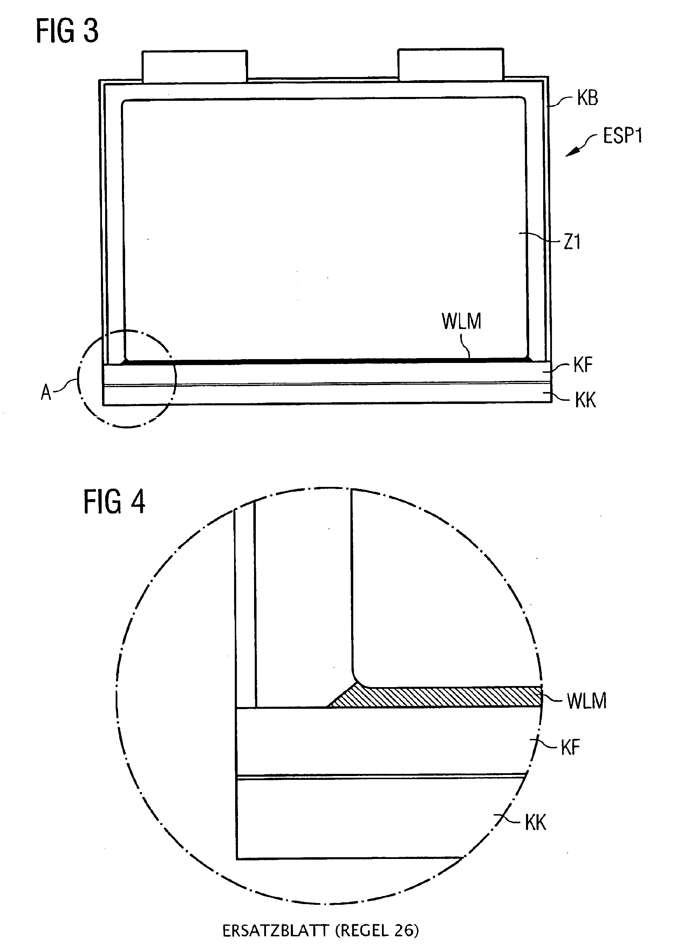

Insbesondere in den Figuren 3 - 6 ist der schematische Aufbau der Kopplung Zelle dargestellt. Die Ausformung des Kühlfußes kann dabei ebenso variieren wie das Herstellungsverfahren desselben. Neben z.B. einem Strangpressprofil sind entsprechend gebogene Bleche im Verbund und andere Varianten denkbar.

Für die variierende Position der Siegelnaht SN unterschiedlicher Zellen, muss eine Umformung des Kühlfußes hinsichtlich der Lage des Hohlraumes berücksichtigt werden.

## Patentansprüche

1. Energiespeicher (ESP1) zur Speicherung von elektrischer Energie, insbesondere für ein Kraftfahrzeug, mit folgenden Merkmalen:
zumindest einer Flachzelle (Z1, Z2) mit einem flachen Zellkörper (ZK), der begrenzt wird durch zwei zu einer Zellkörperebene parallel verlaufende Grundflächen (G11, G12), sowie durch eine erste (ZB) und mehrere zweite (ZD) senkrecht zur Zellkörperebene (ZE) verlaufende Seitenflächen, die die Grundflächen (G11, G12) verbinden;
einer Kühlvorrichtung mit einem Kühlelement (KF), das mit der ersten Seitenfläche (ZB) thermisch gekoppelt ist, um über diese Seitenfläche Wärme aus der Flachzelle abzuführen, und einer wärmeleitenden Verbindungsschicht (WLM), die zwischen der ersten Seitenfläche (ZB) und dem Kühlelement (KF) angeordnet ist, **dadurch gekennzeichnet, dass**
die wärmeleitende Verbindungsschicht (WLM) einen thermisch leitenden Polyurethanschaum, ein Wärmekissen, eine Wärmeleitpaste oder einen thermisch leitenden Schaumstoff umfasst.

2. Energiespeicher nach einem der Ansprüche 1, bei dem der Zellkörper (ZK) der zumindest einen Flachzelle (Z1) eine den Zellkörper umgebende Verpackung aufweist, die zumindest entlang der ersten Seitenfläche einen vom Zellkörper (ZK) wegstehenden Verbindungsabschnitt (SN) aufweist.

3. Energiespeicher nach Anspruch 2, bei dem das Kühlelement (KF) zumindest eine Ausnehmung (KA) zur Aufnahme des von der ersten Seitenfläche wegstehenden Verbindungsabschnitts (SN) aufweist.

4. Energiespeicher nach einem der Ansprüche 1 bis 3, bei dem die Kühlvorrichtung ferner eine Kühlplatte (KB) aufweist, die mit einer der Grundflächen (G12) der zumindest einen Flachzelle thermisch gekoppelt ist.

5. Energiespeicher nach Anspruch 4, bei dem die Kühlplatte (KB) mit dem Kühlelement (KF) verbunden ist.

6. Energiespeicher nach einem der Ansprüche 4 bis 5, der zumindest zwei Flachzellen (Z1, Z2) aufweist, die jeweils mit einer Grundfläche (G12, G21) mit der Kühlplatte (KB) und jeweils mit der ersten Seitenfläche (ZB) mit dem Kühlelement (KF) verbunden sind.

7. Energiespeicheranordnung mit einem Energiespeicher (ESP1) nach einem der vorangegangenen Ansprüche und einem Kühlkörper (KK), der als Wärmesenke für das Kühlelement (KF) und gegebenenfalls die Kühlplatte (KB) dient, und mit dem Kühlelement und/oder der Kühlplatte verbunden ist.

8. Kraftfahrzeug mit einer Energiespeicheranordnung nach Anspruch 7.

## Claims

1. Energy store (ESP1) for storing electrical energy, particularly for a motor vehicle, having the following features:
at least one flat cell (Z1, Z2) with a flat cell body (ZK) which is bounded by two base surfaces (G11, G12) which extend parallel to a cell body plane, and by a first side surface (ZB) and a plurality of second side surfaces (ZD) which extend perpendicularly to the cell body plane (ZE) and which connect the base surfaces (G11, G12);
a cooling device with a cooling element (KF) which is thermally coupled to the first side surface (ZB) in order to conduct away heat from the flat cell via this side surface, and a thermally conductive connecting layer (WLM) which is arranged between the first side surface (ZB) and the cooling element (KF),
**characterized in that** the thermally conductive connecting layer (WLM) comprises a thermally conductive polyurethane foam, a heat cushion, a thermally conductive paste or a thermally conductive foamed material.

2. Energy store according to Claim 1, in which the cell body (ZK) of the at least one flat cell (Z1) has packaging which surrounds the cell body and has, at least along the first side surface, a connecting section (SN) which projects away from the cell body (ZK).

3. Energy store according to Claim 2, in which the cooling element (KF) has at least one recess (KA) for receiving the connecting section (SN) which projects away from the first side surface.

4. Energy store according to one of Claims 1 to 3, in which the cooling device also has a cooling baffle (KB) which is thermally coupled to one of the base surfaces (G12) of the at least one flat cell.

5. Energy store according to Claim 4, in which the cooling baffle (KB) is connected to the cooling element (KF).

6. Energy store according to one of Claims 4 to 5, which has at least two flat cells (Z1, Z2) which are each connected by a base surface (G12, G21) to the cooling baffle (KB) and are each connected by the first side surface (ZB) to the cooling element (KF).

7. Energy store arrangement having an energy store (ESP1) according to one of the preceding claims and a cooling body (KK) which serves as a heat sink for the cooling element (KF) and, if appropriate, the cooling baffle (KB), and is connected to the cooling element and/or the cooling baffle.

8. Motor vehicle having an energy store arrangement according to Claim 7.

## Revendications

1. Réservoir d'énergie (ESP1) pour le stockage d'énergie électrique, en particulier pour un véhicule automobile, ayant les caractéristiques suivantes :
- au moins une pile plate (Z1, Z2) ayant un corps de pile (ZK) plat qui est délimité par deux surfaces de base (G11, G12) s'étendant parallèlement au plan du corps de pile ainsi que par une première (ZB) et plusieurs deuxièmes (ZD) surfaces latérales s'étendant perpendiculairement au plan du corps de pile (ZE) qui relient les surfaces de base (G11, G12) ;
- un dispositif de refroidissement ayant un élément de refroidissement (KF) qui est couplé thermiquement à la première surface latérale (ZB) pour évacuer de la chaleur provenant de la pile plate par le biais de cette surface latérale et une couche de liaison thermoconductrice (WLM) qui est agencée entre la première surface latérale (ZB) et l'élément de refroidissement (KF),
**caractérisé**
**en ce que** la couche de liaison thermoconductrice (WLM) comprend une mousse de polyuréthanne thermoconductrice, un coussin thermique, une pâte thermoconductrice ou une mousse plastique thermoconductrice.

2. Réservoir d'énergie selon la revendication 1, dans lequel le corps de pile (ZK) de l'au moins une pile plate (Z1) présente un emballage entourant le corps de pile qui présente au moins le long de la première surface latérale une section de liaison (SN) agencée à distance du corps de pile (ZK).

3. Réservoir d'énergie selon la revendication 2, dans lequel l'élément de refroidissement (KF) présente au moins un évidement (KA) destiné à recevoir la section de liaison (SN) agencée à distance de la première surface latérale.

4. Réservoir d'énergie selon l'une des revendications 1 à 3, dans lequel le dispositif de refroidissement présente en outre une plaque de refroidissement (KB) qui est couplée thermiquement à une des surfaces de base (G12) de l'au moins une pile plate.

5. Réservoir d'énergie selon la revendication 4, dans lequel la plaque de refroidissement (KB) est reliée à l'élément de refroidissement (KF).

6. Réservoir d'énergie selon l'une des revendications 4 à 5, qui présente au moins deux piles plates (Z1, Z2) reliées respectivement par une surface de base (G12, G21) à la plaque de refroidissement (KB) et par la première surface latérale (ZB) à l'élément de refroidissement (KF).

7. Ensemble de stockage d'énergie comprenant un réservoir d'énergie (ESP1) selon l'une des revendications précédentes et un corps de refroidissement (KK) qui fait fonction de puits thermique pour l'élément de refroidissement (KF), et le cas échéant, la plaque de refroidissement (KB), et qui est relié à l'élément de refroidissement et/ou à la plaque de refroidissement.

8. Véhicule automobile comprenant un ensemble de stockage d'énergie selon la revendication 7.
